# EUROPEAN PATENT SPECIFICATION

(11) **EP 2 440 829 B1**
(45) Date of publication and mention of the grant of the patent: **23.03.2016**
(21) Application number: 10728398.8
(22) Date of filing: 08.06.2010
(51) Int. Cl.: F16L 55/00, G01N 17/00

(54) **METHOD AND SYSTEM FOR ASSESSING CORROSION AND/OR DEGRADATION OF A PIPELINE**
VERFAHREN UND SYSTEM ZUR BEWERTUNG DER KORROSION UND/ODER DEM VERFALL EINER ROHRLEITUNG
Procédé et système pour évaluer la corrosion et/ou la dégradation d'un conduit

(30) Priority: 09.06.2009 EP 09162281
(43) Date of publication of application: 18.04.2012
(73) Proprietor: Nederlandse Organisatie voor toegepast- natuurwetenschappelijk onderzoek TNO, 2595 DA 's-Gravenhage (NL)
(72) Inventor: VOLKER, Arno Willem Frederik, NL-2622 KN Delft (NL); VERSCHOOR, Robert Iman, NL-2986 SG Ridderkerk (NL); KOEK, Erik Alexander, NL-2321 EX Leiden (NL); VAN DEN BERG, Ronald Peter, NL-2548 AK Den Haag (NL)
(74) Representative: V.O.
(86) International application number: PCT/NL2010/050348
(87) International publication number: WO 2010/143948

(56) References cited:
- WO-A1-2004/109238
- WO-A1-2008/102098
- US-A1- 2008 052 044

## Description

### Field of the invention

The present invention concerns a method and system for assessing or predicting corrosion and/or degradation of a pipeline for the transportation of any medium.

### Background

Corrosion of pipelines is a serious problem in industry which leads to large inspection and maintenance costs. One special difficulty is that many pipelines are surrounded by insulation material, in order to maintain the medium inside the pipe at its right temperature or reduce energy costs. Corrosion of the pipeline under the insulation layer is badly trendable, i.e. the corrosion is unpredictable in time, location and severeness. The reason of this is mainly that the environmental conditions to which the different parts of the pipeline are exposed, are unknown. In the present practice parts of the insulation at several locations insulation sheet of the pipeline is removed over a certain distance and the pipeline is inspected for corrosion. In practice 5 - 10% of the total pipe length appears to be affected, i.e. the metal may be corroded and/or the pipe coating, applied to the pipe for rust prevention, may be degraded. In general repair of the pipe by removing the rust and applying a new rust prevention coating is not highly effective as the corrosion tends to continue and the repair coating does not adhere very well to the affected pipe surface.

WO2004109238 discloses a plant management node for supplying water and nutrients to a plant. The plant management node is clamped onto a cable with water and nutrient channels and power/communications lines. By clamping the cable the channels are pierced. The plant management node comprises valves or pumps to supply water and nutrients to individual plants or small groups of plants. Furthermore, the plant management node uses an array of sensors to monitor the levels of the water and nutrients and other factors. The sensors are provided on a flexible substrate that is rolled into a stake and placed into the soil to provide below ground sensors for measuring soil moisture and above ground sensors for measuring temperature, humidity, wind speed and wind direction.

US2008052044 discloses a monitor device attached onto or inside a shipping crate for pharmaceutical shipments. The device monitors the temperature and humidity within the crate in transit to identify whether the contents are safe or compromised.

### Summary

One aim of the present invention is to provide a method and a system which will reduce the expensive and time consuming operations for inspecting (parts of) the pipeline.

Another aim is to provide remote monitoring of the (estimated) corrosion of the pipe wall and/or degradation of its coating in an early stage or even still before it really started to occur.

Yet another aim is an improved, more intensive coverage of the pipeline monitoring.

Still another aim is to provide a mapping of the whole pipeline system and of its locations which need extra attention in view of metal corrosion or coating degradation.

The invention is based on the understanding that it is not necessary to inspect the surface of the pipes for corrosion/degradation when some essential measuring values at or in the neighbourhood of the pipe surface could be measured, in particular the local temperature and the humidity, which values are used for assessment or estimation of the local pipe wall corrosion and/or pipe coating degradation, based on previously known corrosion/degradation (prediction/assessment) models.

The method for predicting corrosion and/or degradation of a pipeline in accordance to the claims thus comprises the following steps:
- providing an array of local sensor modules over the length of the pipeline, preferably at the pipeline's bottom area, the sensor modules being arranged for measuring local temperature and humidity values at the pipeline and transmitting those values, along with sensor module identifiers, to processing means;
- receiving said sensor module identifiers and local temperature and humidity values measured at the pipeline and inputting them into assessment means arranged for assessing local indicators related to the local corrosion and/or degradation of the pipeline.

Although the local temperature and humidity values may, in general, be measured at or in the vicinity of the pipe wall (and pipe wall coating), in many cases the pipe will be surrounded by a layer of insulation material. In those cases the local sensor modules may be arranged to measure the local temperature and humidity values within the insulation material surrounding the pipeline. Besides, temperature values may be input into the assessment means, related to the medium flowing through the pipeline, as the (course of the) medium temperature (and thus of the pipeline wall) may improve the corrosion/degradation prediction model. Moreover, the temperature and humidity values related to the temperature and humidity outside the pipeline, e.g. due to the weather, may be input into the assessment means. Especially in areas at sea it may be preferred that the local sensor modules additionally are arranged to measure the chloride, ammonia, nitride contents and/or the contents of other potentially corrosive components, as in such areas such contents will be important factors for corrosion/degradation forming.

A system for performing the method according to the invention as specified in the claims thus comprises an array of local sensor modules over the length of the pipeline and arranged for measuring local temperature and humidity values at the pipeline and means for transmitting those values, along with sensor module identifiers, to processing means, as well as and means for receiving the sensor module identifiers and local temperature and humidity values measured at the pipeline and inputting them into assessment means arranged for assessing local indicators related to the local corrosion and/or degradation of the pipeline.

Preferably, the system comprises wireless transmission means for transmitting the temperature and humidity values, along with the sensor module identifiers, to the processing means.
The local sensor modules may comprise or may be connected to means for harvesting energy from sunlight and/or any other light source and/or means for harvesting energy from temperature differences between the pipeline and its environment.

### Brief description of the drawing

Hereinafter these objects and advantages will be become apparent from a description of exemplary embodiments using the following figures.
Figure 1 shows part of an insulated pipe including a number of sensor modules and a processing module;
Figures 2a-c illustrate known relationships between some input data and local pipeline corrosion/degradation rates.

### Detailed description of exemplary embodiments

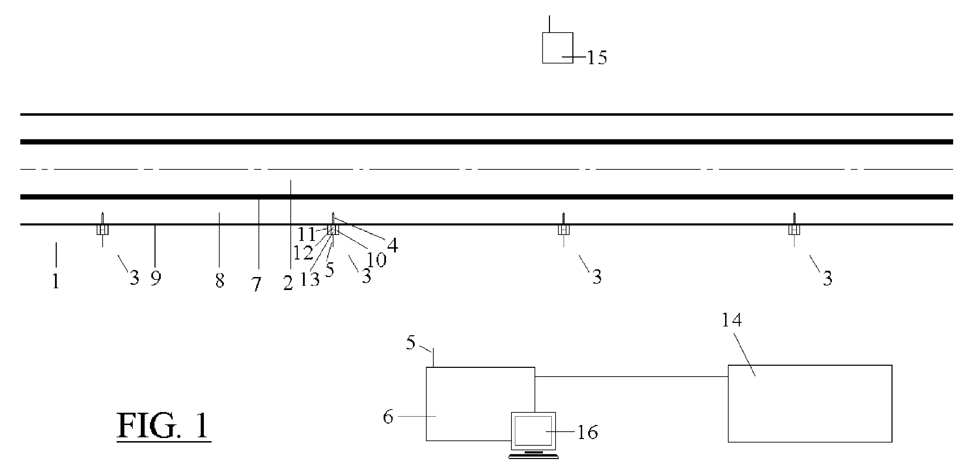

The configuration shown in figure 1 is aimed at the assessment (or prediction) of corrosion and/or degradation of a pipeline 1 for the transportation of any medium 2. An array of local sensor modules 3 is provided over the length of the pipeline 1, with sensor modules 3 arranged for measuring local temperature and humidity values, by means of a measuring probe 4, at a series of different positions along the pipeline and transmitting those values via a wireless path, for example via antennas 5, along with sensor module identifiers for each sensor module, to a processor or processing system 6. The processing system 6 receives the sensor module identifiers and local temperature and humidity values measured at the pipeline and inputs them into a (software) assessment module which is arranged for assessing local indicators related to the local corrosion and/or degradation of the pipeline.

Measuring probe 4 may comprise an electronic temperature sensor and an electronic humidity sensor. Commercially available temperature and humidity sensors may be used. Any type of temperature sensor may be used, such as a thermocouple or a temperature dependent resistor. Any type of humidity sensor may be used, such as a capacitive humidity sensor, which comprises a circuit to measure capacitance between capacitor plates, wherein a region between the capacitor plates is in communication with the ambient, so that ambient humidity affects humidity in said region. As another example a resistive humidity sensor may used. Preferably, a type humidity sensor is used that remains functional after direct exposure to water.

Each sensor module 3 comprises a transmitter for transmitting measured values. A wireless transmitter coupled to antenna 5 may be used. Transmission may involve a wireless network protocol such as sigbee. A corresponding receiver may be used. In an embodiment transmission directly form the measuring probe to a central node may be used. In another solution, a human inspector may be sent along the pipeline with a handheld wireless readout device to read out the information from the measuring probes locally. In this case RFID techniques or Bluetooth may be used for example. In this case, a measuring probe preferably comprises a memory device (e.g. a flash memory), circuits configured to store data derived from its sensor or sensors in the memory device, and a transmitter coupled to the memory device and configured to read out data from the memory and transmit it to the read out device when probed by the read out device. Sensor data may be stored every four hours for example and read out every two months. The data may later be uploaded to the processing system from the read out device. The processing system may comprise a conventional personal computer.

As can be seen in figure 1, the wall 7 of the pipeline 1 is surrounded by a layer 8 of insulation material which is covered by metal protection sheet material 9, which is not watertight (so rain and snow may penetrate into the insulation layer 8). The local sensor modules 3 are arranged to measure the local temperature and humidity values within the insulation material 8 surrounding the pipeline 1. As shown, the probes 4 are inserted through the protection layer 9, and are thus capable to measure the temperature and humidity inside the insulation layer 8 and to transmit the temperature and humidity values to the processing system 6 via the antennas 5.

The local sensor modules comprise an electrothermal device for harvesting energy from temperature differences between the pipeline and its environment, such a devices may be realized e.g. by means of Peltier elements which extend inside the insulation layer 8 and outside the insulation layer 8. Coupled Peltier junctions of the Peltier elements may be provided inside and outside insulation layer 8 respectively. Due to the temperature difference inside and outside the Peltier element generates electricity for loading a battery 11, which is connected to feed a small local processor which collects and pre-processes the temperature and humidity values detected by the probe 4 and transmits them, including a (unique) module identifier, to the processing system 6, via a transmitter 13 and the antennas 5.

The local sensor modules may, besides, comprise, or be connected to, means for harvesting energy from sunlight and/or any other light source, these means may be realized for example by solar panels located at positions adjacent the pipeline and coupled to batteries 11 of the sensor modules. A small solar panels may suffice. The solar panels are not shown explicitly in figure 1.

In the processing module 6 the measured temperature and humidity data may converted into (local) corrosion and/or degradation data, based on several presumptions such as formed by a temperature and humidity dependent predictive model of corrosion and/or degradation. Except the temperature and humidity data, also the physical course of the pipeline may be considered in the assessments, e.g. the occurrence of curves, branches etc. in the pipeline, which can be extracted from a pipeline management system 14 and/or sensor module positioning means which are discussed hereinafter.

Moreover, temperature values related to the fluid flowing through the pipeline may be input into an assessment module in processing module 6. Such temperature values may be derived from the pipeline management system 14, e.g. in the form of input or output fluid temperature data and/or data measured at the pipeline itself at some locations.

Also temperature and humidity values related to the temperature and humidity outside the pipeline, e.g. due to the weather, may be input into the processing module 6, e.g. from one or more weather stations 15.

The local sensor modules may additionally be arranged to measure the chloride content, when the pipelines are located in the neighbourhood of the sea.

In order to be able to process the locally sensed temperature and humidity values correctly the data from the sensor modules should be linked to their individual locations. Two ways may be followed:
- One way is to link each sensor module identifier to information about its position, enabling that the processing module to derive from the identifiers which received temperature/humidity data originate from which (sensor module) position. In this option the sensor module identifiers have to be linked initially, during installation of the sensor modules, to their global positions (e.g. determined by using a GPS receiver).
- Another way is to provide each sensor module with means for determining the sensor module's global position, e.g. a small GPS receiver, and transmitting that global position data to the processing means, together with or instead of the relevant sensor module's identifier and the temperature and humidity data. An alternative method is the use of radio direction finding (RDF)wherein, by combining the direction information from two or more suitably spaced receivers, the source of a transmission (in this case the sensor module transmitter) may be located in space via triangulation. In either case the temperature/humidity data are linked to their originating locations.

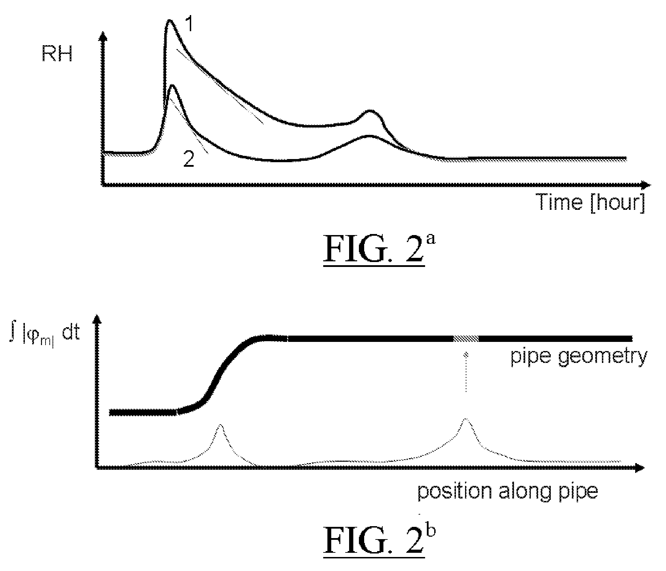

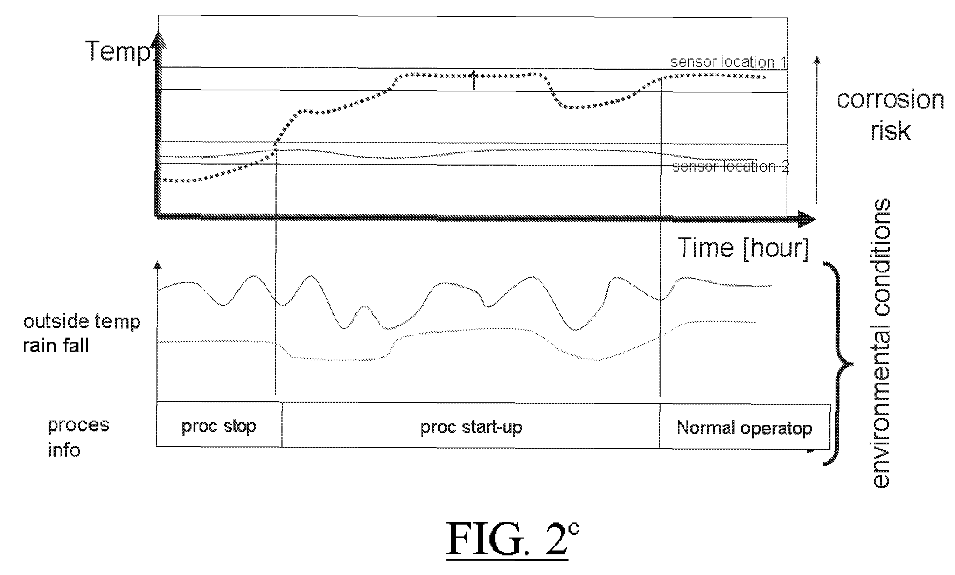

The local temperature, humidity and, optionally, chloride content, the medium temperature inside the pipeline and the outside (environmental) temperature and humidity are determinative for the creation of (metal) corrosion and (coating) degradation. As most influences can be quantified by means of models which are implemented in the assessment software installed in the processing module 6, the whole pipeline network can continuously be monitored and the assessed corrosion/degradation values (e.g. rates), together with their originating locations, can be displayed by a monitor 16, which is illustrated in figure 2.

Finally some examples will be given, illustrated in figures 2a - 2c of known relationships between several input data and metal corrosion and/or coating degradation rates.

Figure 2a shows the diagram of time dependent the humidity (RH) measured by two sensor modules at two different locations. The diagram shows that from the time dependence of the humidity sensed by two sensor modules measured after rainfall (sensed by the weather station 15) it can be concluded that, although the insulation layer at both pipeline locations have become wet, the insulation at location 1, sensed by sensor module 1, dries much slower than the insulation at location 2, represented by the humidity data sent by sensor 2. Accordingly, processing system 6 may be configured to determine the rates of change of relative humidity after peaks due to rainfall, and to compare the rates of change for different sensor locations, and to detect location with lower rates of change as locations with higher corrosion risk. This information is interpreted by the processing system 6 as an area having a higher corrosion risk, which information can be displayed by the monitor.

Figure 2b shows height of the pipeline and water flux. The figure illustrates that, based on the local humidity at the various locations, water flux along the pipeline can be assessed. An important factor is the geometry of the pipeline: sensor modules located at the lower part of an ascending portion of the pipeline (shown left) may sense rather much humidity due to the fact that rain water penetrated into the insulation layer will flow towards the lower part in the ascending pipeline. However, if a rather high water flux is sensed in a horizontal portion of the pipeline (right in the figure) the processing system may conclude that such location contains a defect in the pipeline insulation, which is indicated as a location having higher corrosion risk. Accordingly, processing system 6 may be configured to determine water flux at respective positions along the pipeline, detect local maxima of water flux at positions not corresponding to a descending part of the pipeline as locations with higher corrosion risk.

Figure 2c shows some temperature time dependencies on the basis of which metal corrosion and/or coating degradation may be estimated by the processing system 6. In general the corrosion risk is higher at temperatures between about 50 - 90 °C, of course depending on the exposure times. In the assessment of corrosion/degradation based on the temperature and the humidity time dependence in the pipeline insulation the influences of the fluid temperature (time dependence) inside the pipeline, the weather (rain, temperature, wind) are taken into account, on the basis of which the corrosion/degradation of the pipeline surface can be assessed by the processing means and displayed accordingly. Accordingly, processing system 6 may be configured to input the temperature and the humidity time dependence in the pipeline insulation measured by sensors at different locations, and the fluid temperature (time dependence) inside the pipeline and/or the weather (absence of presence of rain, rain intensity, temperature, wind speed and/or direction). Processing system 6 may be configured to use this input information into a model for predicting corrosion and/or coating degradation. In one example, such a model defines corrosion and/or degradation rates for different combinations of input parameter value, for example in the form of a table of stored rate value for the different combinations, or parameters of a function (e.g. coefficients of a polynomial) that relates combinations of input parameter values to the rates. In this example processing system 6 may be configured to integrate or sum the computed corrosion and/or degradation rates as a function of time (i.e. to determine aggregate rates), for respective positions along the pipeline and display the results, or compare the results with predetermined threshold values to trigger the generation of an alarm signal when the threshold is exceeded. In another embodiment, processing system 6 may be configured to display computed rates for individual time points themselves and/or to compare them with threshold values and used to generate alarm signals.

When it is stated herein that processing system 6 is configured to perform a specified operation, this means that processing system 6 contains a computer program with instructions for a programmable processor of the processing system 6 that, when executed by the processor will cause the processor to execute the operations, or that processing system 6 contains dedicated electronic circuit designed to execute these operations.

Processing system 6 may be configured to compute an amplitude of humidity variation as a function of time (e.g. a peak amplitude) after rainfall, a humidity decay rate as a function of time and/or a remanent humidity level towards the humidity develops as a function of time after rainfall, at mutually different positions along the pipeline. Processing system 6 may be configured to compare the results of these computations for different positions to identify deviating positions.

## Claims

1. Method of predicting local corrosion and/or degradation of a pipeline for the transportation of any medium, the pipeline provided with a layer (8) of insulation material surrounding a pipe, the method comprising the following steps:
- providing an array of local sensor modules over the length of the pipeline, arranged for measuring local temperature and humidity values within the layer (8) of insulation material and transmitting the measured values, along with sensor module identifiers, to processing means;
- receiving said sensor module identifiers and local temperature and humidity values measured at the pipeline from the array of local sensor modules and
- inputting the received sensor module identifiers and local temperature and humidity values into a processor
- using the processor to assess local indicators related to the local corrosion and/or degradation of the pipeline based on the local temperature and humidity values within the layer (8) of insulation material.

2. Method according to claim 1, wherein the layer (8) of insulation material is covered by a protection sheet (9) of metal material, wherein the local sensor modules are inserted through the protection sheet (9).

3. Method according to claim 1, wherein said assessing of local indicators comprises comparing local indicators derived from the measurements obtained at mutually different positions along the pipeline

4. Method according to claim 3, wherein said data local indicators along the pipeline comprises at least one of an amplitude of humidity variation, a humidity decay rate and a remanent humidity level at mutually different positions along the pipeline.

5. Method according to claim 1, wherein said assessing of local indicators comprises using a model to compute a prediction of aggregate corrosion data from the measurements.

6. Method according to claim 1 or 2, wherein temperature values are input into the processor, related to the medium flowing through the pipeline.

7. Method according to any preceding claim, wherein temperature and humidity values are input into means for evaluating predicted local corrosion and/or degradation of the pipeline related to the temperature and humidity outside the pipeline.

8. Method according to any preceding claims, wherein the local sensor modules are arranged to measure the contents of potentially corrosive components like chloride, ammonia, nitride contents etc.

9. System for predicting local corrosion and/or degradation of a transport pipeline, the system comprising a pipeline surrounded by a layer (8) of insulation material, an array of local sensor modules located at respective positions over the length of the pipeline and arranged to measure local temperature and humidity values within the layer (8) of insulation material, transmitters for transmitting the measured values, along with sensor module identifiers, a receiver for receiving said sensor module identifiers and measured values and a processor coupled to the receiver and configured to input the measured values and assess local indicators related to the local corrosion and/or degradation of the pipeline based on the local temperature and humidity values within the layer (8) of insulation material.

10. System according to claim 9, wherein the transmitter is a wireless transmitter configured to transmit said values, along with said sensor module identifiers.

11. System according to claim 9 or 10, comprising information linking the sensor module identifiers to the relevant sensor module's position.

12. System according to claim 9 or 10, the sensor module comprising a position detector configured to determine the sensor module's geometrical position and inputting that position data to the processor.

13. System according to claim 9, said local sensor modules comprising or being connected to solar cells.

14. System according to claim 9, said local sensor modules comprising or being connected to an electrothermal device coupled between the pipeline and its environment and configured to harvest energy from temperature differences between the pipeline and its environment.

## Patentansprüche

1. Verfahren zur Bewertung lokaler Korrosion und/oder des Verfalls einer Rohrleitung für den Transport eines beliebigen Mediums, die Rohrleitung versehen mit einer ein Rohr umgebenden Schicht (8) von Isoliermaterial, das Verfahren umfassend folgende Schritte:
- Bereitstellen einer Anordnung lokaler Sensormodule über die Länge der Rohrleitung, angeordnet zum Messen lokaler Temperatur- und Feuchtigkeitswerte innerhalb der Schicht (8) von Isoliermaterial und Übertragen der gemessenen Werte, zusammen mit Sensormodulidentifikatoren, an Verarbeitungsmittel;
- Empfangen der Sensormodulidentifikatoren und der lokalen Temperatur- und Feuchtigkeitswerte, gemessen an der Rohrleitung durch die Anordnung lokaler Sensormodule, und
- Eingeben der empfangenen Sensormodulidentifikatoren und lokalen Temperatur- und Feuchtigkeitswerte in einen Prozessor
- Verwendung des Prozessors zur Beurteilung lokaler Indikatoren, bezogen auf die lokale Korrosion und/oder den lokalen Verfall der Rohrleitung basierend auf den lokalen Temperatur- und Feuchtigkeitswerten innerhalb der Schicht (8) von Isoliermaterial.

2. Verfahren nach Anspruch 1, wobei die Schicht (8) von Isoliermaterial durch eine Schutzabdeckung (9) aus Metallmaterial bedeckt ist, wobei die lokalen Sensormodule durch die Schutzabdeckung (9) eingesetzt werden.

3. Verfahren nach Anspruch 1, wobei die Beurteilung lokaler Indikatoren umfasst, dass lokale Indikatoren, abgeleitet von den an voneinander verschiedenen Positionen entlang der Rohrleitung erhaltenen Messungen, verglichen werden.

4. Verfahren nach Anspruch 3, wobei die Daten lokaler Indikatoren entlang der Rohrleitung mindestens Daten eines einer Amplitude der Feuchtigkeitsabweichung, einer Feuchtigkeitsverfallrate oder einer remanenten Feuchtigkeitsstufe an voneinander verschiedenen Positionen entlang der Rohrleitung umfassen.

5. Verfahren nach Anspruch 1, wobei die Beurteilung lokaler Indikatoren die Verwendung eines Modells zur Berechnung einer Vorhersage angesammelter Korrosionsdaten von den Messungen umfasst.

6. Verfahren nach Anspruch 1 oder 2, wobei Temperaturwerte, bezogen auf das durch die Rohrleitung fließende Medium, in den Prozessor eingegeben werden.

7. Verfahren nach einem der vorhergehenden Ansprüche, wobei Temperatur- und Feuchtigkeitswerte in Mittel zur Bewertung vorhergesehener lokaler Korrosion und/oder lokalem Verfall der Rohrleitung bezogen auf die Temperatur und Feuchtigkeit außerhalb der Rohrleitung eingegeben werden.

8. Verfahren nach einem der vorhergehenden Ansprüche, wobei die lokalen Sensormodule angeordnet sind, um die Gehalte potenziell korrosiver Komponenten wie Chlorid-, Ammoniak-, Nitridgehalte, zu messen.

9. System zur Vorhersage von lokaler Korrosion und/oder lokalem Verfall einer Transportrohrleitung, das System umfassend eine Rohrleitung, umgeben von einer Schicht (8) von Isoliermaterial, eine Anordnung lokaler Sensormodule, angeordnet an entsprechenden Positionen über die Länge der Rohrleitung und angeordnet zum Messen lokaler Temperatur- und Feuchtigkeitswerte innerhalb der Schicht (8) von Isoliermaterial, Sender zum Übertragen der gemessenen Werte, zusammen mit Sensormodulidentifikatoren, einen Empfänger zum Empfangen der Sensormodulidentifikatoren und gemessenen Werte und einen Prozessor, gekoppelt an den Empfänger und konfiguriert zum Eingeben der gemessenen Werte und Beurteilen lokaler Indikatoren bezogen auf die lokale Korrosion und/oder den lokalen Verfall der Rohrleitung basierend auf den lokalen Temperatur- und Feuchtigkeitswerten innerhalb der Schicht (8) von Isoliermaterial.

10. System nach Anspruch 9, wobei der Sender ein drahtloser Sender ist, konfiguriert zum Übertragen der Werte, zusammen mit den Sensormodulidentifikatoren.

11. System nach Anspruch 9 oder 10, umfassend Informationen, die die Sensormodulidentifikatoren mit der Position des jeweiligen Sensormoduls verbinden.

12. System nach Anspruch 9 oder 10, das Sensormodul umfassend einen Positionsdetektor, konfiguriert zum Bestimmten der geometrischen Position des Sensormoduls und Eingeben dieser Positionsdaten in den Prozessor.

13. System nach Anspruch 9, wobei die lokalen Sensormodule Solarzellen umfassen oder mit diesen verbunden sind.

14. System nach Anspruch 9, wobei die lokalen Sensormodule eine elektrothermische Vorrichtung, gekoppelt zwischen der Rohrleitung und ihrer Umgebung und konfiguriert zum Sammeln von Energie von Temperaturunterschieden zwischen der Rohrleitung und ihrer Umgebung, umfassen oder mit dieser verbunden sind.

## Revendications

1. Procédé pour évaluer la corrosion et/ou la dégradation locale d'une canalisation pour le transport d'un quelconque milieu, la canalisation étant pourvue d'une couche (8) de matériau isolant entourant un tuyau, le procédé comprenant les étapes suivantes consistant à :
- fournir un réseau de modules de capteur locaux sur la longueur de la canalisation, conçu pour mesurer des valeurs de température et d'humidité locales dans la couche (8) de matériau isolant, et transmettre les valeurs mesurée, ainsi que des identifiants de module de capteur, à des moyens de traitement ;
- recevoir lesdits identifiants de module de capteur et les valeurs de température et d'humidité locales mesurées au niveau de la canalisation à partir du réseau de modules de capteur locaux, et
- entrer les identifiants de module de capteur et les valeurs de température et d'humidité locales reçus dans un processeur,
- utiliser le processeur pour évaluer des indicateurs locaux liés à la corrosion et/ou la dégradation locale de la canalisation sur la base des valeurs de température et d'humidité locales à l'intérieur de la couche (8) de matériau isolant.

2. Procédé selon la revendication 1, dans lequel la couche (8) de matériau isolant est recouverte d'une feuille de protection (9) en un matériau métallique, dans lequel les modules de capteur locaux sont insérés à travers la feuille de protection (9).

3. Procédé selon la revendication 1, dans lequel ladite évaluation d'indicateurs locaux comprend la comparaison des indicateurs locaux dérivés des mesures obtenues à des positions mutuellement différentes le long de la canalisation.

4. Procédé selon la revendication 3, dans lequel lesdites données d'indicateurs locaux le long de la canalisation comprennent au moins une donnée parmi une amplitude de variation d'humidité, un taux de décroissance d'humidité et un niveau d'humidité rémanente à des positions mutuellement différentes le long de la canalisation.

5. Procédé selon la revendication 1, dans lequel ladite évaluation d'indicateurs locaux comprend l'utilisation d'un modèle pour calculer une prévision de données de corrosion globales à partir des mesures.

6. Procédé selon la revendication 1 ou 2, dans lequel les valeurs de température sont entrées dans le processeur, en rapport avec le milieu circulant à travers la canalisation.

7. Procédé selon l'une quelconque des revendications précédentes, dans lequel les valeurs de température et d'humidité sont entrées dans des moyens d'évaluation de la corrosion et/ou dégradation locale prévue de la canalisation par rapport à la température et l'humidité à l'extérieur de la canalisation.

8. Procédé selon l'une quelconque des revendications précédentes, dans lequel les modules de capteurs locaux sont agencés pour mesurer les teneurs en composants potentiellement corrosifs comme les teneurs en chlorure, en ammoniac, en nitrure, etc.

9. Système pour évaluer la corrosion et/ou la dégradation d'une canalisation de transport, le système comprenant une canalisation pourvue d'une couche (8) de matériau isolant, un réseau de modules de capteur locaux situés dans des positions respectives sur la longueur de la canalisation, et conçu pour mesurer des valeurs de température et d'humidité locales dans la couche (8) de matériau isolant, des émetteurs pour transmettre les valeurs mesurées, ainsi que des identifiants de module de capteur, un récepteur pour recevoir lesdits identifiants de module de capteur et les valeurs mesurées, et un processeur couplé au récepteur et configuré pour entrer les valeurs mesurées et évaluer les indicateurs locaux liés à la corrosion et/ou la dégradation locale de la canalisation sur la base des valeurs de température et d'humidité locales à l'intérieur de la couche (8) de matériau isolant.

10. Système selon la revendication 9, dans lequel l'émetteur est un émetteur sans fil configuré pour transmettre lesdites valeurs, ainsi que lesdits identifiants de module de capteur.

11. Système selon la revendication 9 ou 10, comprenant des informations reliant les identifiants de module de capteur à la position du module de capteur pertinente.

12. Système selon la revendication 9 ou 10, le module de capteur comprenant un détecteur de position configuré pour déterminer la position géométrique du module de capteur, et pour entrer ces données de position vers le processeur.

13. Système selon la revendication 9, lesdits modules de capteur locaux, comprenant ou étant connectés à des piles solaires.

14. Système selon la revendication 9, lesdits modules de capteur locaux comprenant ou étant connectés à un dispositif électrothermique couplé entre la canalisation et son environnement, et configuré pour récolter de l'énergie à partir d'écarts de température entre la canalisation et son environnement.
